# EUROPÄISCHE PATENTANMELDUNG

(11) **EP 4 212 394 A1**
(43) Veröffentlichungstag der Anmeldung: **19.07.2023**
(21) Anmeldenummer: 23151847.3
(22) Anmeldetag: 16.01.2023
(51) Int. Cl.: B60R 16/02, H02G 3/30

(54) **FREIZEITFAHRZEUG UND KABELHALTER FÜR EIN FREIZEITFAHRZEUG**

(30) Priorität: 15.01.2022 DE 102022100876
(71) Anmelder: Hymer GmbH & Co. KG, 88339 Bad Waldsee (DE)
(72) Erfinder: Schüle, Tim, 88289 Waldburg (DE); Schulz, Bastian, 88364 Wolfegg (DE)
(74) Vertreter: Waller, Stefan

(57) **Zusammenfassung**

Kabelhalter (1) für ein Freizeitfahrzeug (2), insbesondere ein Wohnmobil oder einen Wohnwagen, mit einem Grundkörper (4), wobei der Grundkörper (4) zumindest eine Aufnahme (5) aufweist, durch die im montierten Zustand ein Kabel (6) geführt ist. Vorgeschlagen wird, dass der Grundkörper (4) einen Befestigungsdom (10) aufweist, an dem Grundkörper im montierten Zustand an einem Element (2), insbesondere einem Deckenelement (2), des Freizeitfahrzeugs (3) befestigt ist. Hierbei erstreckt sich die Aufnahme (5) zwischen einer äußeren Wand (11) und dem Befestigungsdom (10) ringförmig um den Befestigungsdom (10). Außerdem weist die äußere Wand (11) zumindest eine Öffnung (12) auf, durch die im montierten Zustand zumindest eine Seite (7, 8) des Kabels (6) aus der Aufnahme (5) nach außen geführt ist. Ferner ist ein Freizeitfahrzeug (3) mit solch einem Kabelhalter (1) angegeben.

## Beschreibung

Die Erfindung betrifft ein Freizeitfahrzeug, insbesondere ein Wohnmobil oder einen Wohnwagen, und einen Kabelhalter für solch ein Freizeitfahrzeug.

Aus der DE 199 06 686 A1 ist ein Anschlusssockel für Lampenbaldachine bei entfernt liegendem Elektroanschluss bekannt. Hierbei wird das Anschlusskabel von einer Anschlussdose über eine Mittelkonsole zu einem Anschlusssockel für den Lampenbaldachin geführt.

Bei einem Freizeitfahrzeug stellen sich besondere Anforderungen. Eine Kabelführung, wie sie aus der DE 199 06 686 A1 bekannt ist, eignet sich zur festen Installation in einem Haus beziehungsweise einer Immobilie. Die Installation in einem Haus zeichnet sich dadurch aus, dass das Kabel nach der Montage fest angeordnet ist. Im Unterschied dazu würde bei einem Freizeitfahrzeug das Problem bestehen, dass insbesondere während einer Fahrt Kräfte auf ein durchhängendes Kabel wirken, so dass es zu Pendelbewegungen kommt. Entsprechende Probleme würden sich bei einer Lampe ergeben, die an einem Kabel aufgehängt ist. Somit eignen sich herkömmliche Kabelhalter, die in Gebäuden zum Einsatz kommen, nicht für ein Freizeitfahrzeug.

Aufgabe der Erfindung ist es, einen Kabelhalter für ein Freizeitfahrzeug, insbesondere für ein Wohnmobil oder einen Wohnwagen, und ein Freizeitfahrzeug anzugeben, die in vorteilhafter Weise ausgestaltet sind, wobei insbesondere die speziellen Anforderungen eines Fahrzeugs erfüllt sind.

Die Aufgabe wird durch einen Kabelhalter mit den Merkmalen des unabhängigen Patentanspruchs 1 und durch ein Freizeitfahrzeug mit den Merkmalen des Patentanspruchs 11 gelöst. Vorteilhafte Weiterbildungen der Erfindung sind in den Unteransprüchen angegeben

Die Aufgabe wird durch einen Kabelhalter für ein Freizeitfahrzeug, insbesondere ein Wohnmobil oder einen Wohnwagen, mit einem Grundkörper gelöst, wobei der Grundkörper zumindest eine Aufnahme aufweist, durch die im montierten Zustand ein Kabel geführt ist, wobei der Grundkörper einen Befestigungsdom aufweist, an dem der Grundkörper im montierten Zustand an einem Element, insbesondere einem Deckenelement, des Freizeitfahrzeugs befestigt ist, wobei sich die Aufnahme zwischen einer äußeren Wand und dem Befestigungsdom ringförmig um den Befestigungsdom erstreckt und wobei die äußere Wand zumindest eine Öffnung aufweist, durch die im montierten Zustand zumindest eine Seite des Kabels aus der Aufnahme nach außen geführt ist.

Ferner wird die Aufgabe durch ein Freizeitfahrzeug, insbesondere ein Wohnmobil oder einen Wohnwagen, mit zumindest einem solchen Kabelhalter gelöst, wobei ein Kabel durch die Aufnahme des Grundkörpers des Kabelhalters geführt ist.

In vorteilhafter Weise sind der Grundkörper und/oder die äußere Wand an der Öffnung abgerundet ausgestaltet. Hierdurch werden scharfe Kanten oder zu kleine Radien vermieden. Dies vermeidet Abnutzungen und Knicke am Kabel, welche Beschädigungen und Brüche verursachen könnten. Speziell bei auftretenden Bewegungen besteht das Problem, dass scharfe Kanten zu Abnützungen und dann zu Beschädigungen am Kabel führen würden. Durch die abgerundete Ausgestaltung an der Öffnung werden auch bei Bewegungen, wie sie beispielsweise bei einer Fahrt auftreten, Abnutzungen und Beschädigungen vermieden. Hierdurch werden auch häufige Verstellungen möglich. Beispielsweise kann vor Fahrtantritt eine Vorbereitung des Freizeitfahrzeugs erfolgen, wobei eine Kabel gebundene Pendelleuchte so nah wie möglich an den Kabelhalter verstellt wird, um Pendelbewegungen während der Fahrt zu vermeiden. Im Stand, beispielsweise auf einem Campingplatz, kann dann die Pendelleuchte herabgelassen werden, indem eine Verstellung erfolgt.

Vorteilhaft ist es auch, dass der Grundkörper die äußere Wand umfasst. Hierdurch ist eine einstückige Ausgestaltung des Grundkörpers zumindest bezüglich des Befestigungsdoms und der äußeren Wand möglich. Ferner ist es vorteilhaft, dass die Aufnahme im montierten Zustand zu dem Element, insbesondere dem Deckenelement, hin offen ist. An dem Deckenelement kann beispielsweise die Decke beziehungsweise der Dachhimmel des Freizeitfahrzeugs ausgestaltet sein. Hierdurch ergibt sich eine einfache Montierbarkeit. Ferner kann hierdurch gegebenenfalls in einfacher Weise ein Austausch erfolgen.

Vorteilhaft ist es, dass an dem Grundkörper, insbesondere zumindest am Befestigungsdom, zumindest eine Rippe vorgesehen ist, an der im montierten Zustand das Kabel anliegt. Speziell ist es vorteilhaft, dass an dem Grundkörper, insbesondere zumindest dem Befestigungsdom, mehrere Rippen vorgesehen sind, die über einen Winkelbereich von mindestens 90°, vorzugsweise mindestens 180°, der sich um den Befestigungsdom erstreckenden Aufnahme an dem Grundkörper, insbesondere zumindest dem Befestigungsdom, ausgestaltet sind. Durch die Rippen wird in bestimmten Positionen des Kabels eine Fixierung des Kabels bei Belastung ermöglicht.

Hierbei ist es insbesondere von Vorteil, dass der Winkelbereich von der Öffnung in der äußeren Wand abgewandt ist und dass beide Seiten des Kabels durch die Öffnung aus der Aufnahme nach außen geführt sind. Hierdurch können Zugkräfte des Kabels; die beispielsweise durch die Pendelleuchte verursacht sind, in Zusammenwirkung mit den Rippen eine vorteilhafte Fixierung des Kabels gewährleisten.

Vorteilhaft ist es auch, dass die zumindest eine Rippe so ausgestaltet ist, dass im montierten Zustand das Kabel zumindest näherungsweise senkrecht zu der Rippe über die zumindest eine Rippe geführt ist. Das Kabel kann hierbei an seiner Mantelfläche gegen die Rippen beaufschlagt werden, wobei hierdurch ein Verstellen beziehungsweise Verrutschen des Kabels entlang seiner Erstreckung verhindert ist, wenn eine wesentliche Zugkraft auf das Kabel wirkt.

In vorteilhafter Weise ist zumindest ein Positionierungselement vorgesehen, das im montierten Zustand den Grundkörper relativ zu dem Element positioniert. Hierdurch kann insbesondere ein Drehen des Grundkörpers relativ zu dem Element verhindert werden.

Hierbei ist es insbesondere vorteilhaft, dass das Positionierungselement an dem Befestigungsdom vorgesehen ist und/oder dass der Befestigungsdom eine Durchgangsöffnung aufweist, durch die sich im montierten Zustand ein den Grundkörper an dem Element befestigendes Befestigungsmittel erstreckt, wobei das Positionierungselement koaxial zu einer Achse der Durchgangsöffnung angeordnet ist und/oder dass das Positionierungselement als stiftförmiges Positionierungselement ausgestaltet ist, das im montierten Zustand gegen das Element beaufschlagt ist beziehungsweise in eine an dem Element vorgesehene Vertiefung eingreift. Dadurch sind vorteilhafte Ausgestaltungen möglich.

Vorteilhaft ist es auch, dass eine Abdeckkappe vorgesehen ist, die im montierten Zustand die Durchgangsöffnung des Befestigungsdoms an einer von dem Element angewandten Seite des Grundkörpers verschließt. Hierdurch wird der optische Gesamteindruck wesentlich verbessert. Außerdem kann die Abdeckkappe so angebracht werden, dass ein Manipulationsschutz bezüglich des Befestigungsmittels realisiert ist. Hierfür kann die Abdeckkappe beispielsweise in den Grundkörper eingeklebt sein.

Ferner ist es vorteilhaft, dass der Kabelhalter und das durch die Aufnahme des Grundkörpers des Kabelhalters geführte Kabel so ausgestaltet sind, dass eine veränderbare Fixierung des Kabels an dem Kabelhalter ermöglicht ist. Hierbei kann insbesondere eine Kabeldicke entsprechend an die Aufnahme des Grundkörpers angepasst sein.

Je nach Ausgestaltung können somit ein oder mehrere Vorteile realisiert werden. Im Unterschied zu einer herkömmlichen Ausgestaltung, bei der die Zugentlastung nur über einen Punkt erfolgt, kann bei einer vorgeschlagenen Ausgestaltung eine Zugentlastung realisiert werden, bei der eine Abnutzung minimiert ist. Im Unterschied zu einer herkömmlichen Ausgestaltung, bei der sich der montierte Kabelhalter um eine Achse frei drehen kann, kann bei einer vorgeschlagenen Ausgestaltung ein solches Drehen um eine Achse im montierten Zustand verhindert werden. Insbesondere kann eine bestimmte Drehorientierung vorgegeben werden.

Somit kann der Kabelhalter als Zugentlastungshaken dienen, wobei durch größere Radien die Gefahr von Kabelbrüchen deutlich verringert ist. Außerdem kann die Zugentlastung auf mehrere Punkte beziehungsweise Stellen verteilt werden, um Belastungsspitzen zu entschärfen und um das Verrutschen des Kabels zu unterbinden. Insbesondere mit einem Positionierungsstift an der dem Element, insbesondere dem Deckenelement, zugewandten Oberseite des Grundkörpers kann verhindert werden, dass sich der Kabelhalter während und nach dem Verschrauben in beispielsweise die Decke frei drehen kann. Somit ist eine eindeutige Positionierung und Ausrichtung des vorgeschlagenen Kabelhalters möglich.

Durch zumindest eine Rundung an der Öffnung des Grundkörpers wird verhindert, dass das Kabel geknickt und beschädigt wird. Die zumindest eine Rundung kann beispielsweise mit einem Radius von etwa 3 mm ausgeführt sein. Der Grundkörper kann eine Rosette aufweisen, die am Befestigungsdom durch die Rippen gebildet ist. Die Kabelführung kann an der Aufnahme um die Rosette herum erfolgen, so dass eine effektive Zugentlastung erzielt ist. Die vorzugsweise ausgeprägten Rippen können hier zur weiteren Zugentlastung beitragen.

Mit dem stiftförmigen Positionierungselement (Positionierungsstift) an der Oberseite des Grundkörpers kann verhindert werden, dass sich der Grundkörper nach dem Verschrauben in beispielsweise die Decke frei drehen kann.

An der Unterseite des Grundkörpers kann eine Abdeckplatte aufgesetzt werden, um die beispielsweise als Verschraubloch dienende Durchgangsöffnung abzudecken. Hierdurch ist im fertiggestellten Zustand das Befestigungsmittel, insbesondere eine Schraube, von unten nicht mehr sichtbar. Dies kann auch Manipulationen durch einen Endnutzer verhindern.

Je nach Ausgestaltung des Kabelhalters kann auch eine einfache Herstellung ermöglicht werden. Insbesondere kann der Kabelhalter zumindest im Wesentlichen aus dem Grundkörper gebildet sein. Der Grundkörper kann hierbei als Spritzgussteil ausgestaltet sein. Im Unterschied zu einer herkömmlichen Ausgestaltung wird dann kein Werkzeug mit zusätzlichem Schieber und dergleichen benötigt.

Ferner kann auch eine verbesserte Montage ermöglicht werden. Insbesondere durch die abgerundeten Kanten kann die Montage erleichtert beziehungsweise die Schnittgefahr für den Monteur verringert werden. Ferner ist die Montage insbesondere bei einer zumindest im Wesentlichen einstückigen Ausgestaltung des Grundkörpers erheblich vereinfacht. Über das Positionierungselement kann außerdem eine bestimmte Montageposition vorgegeben werden.

Die Rippen innerhalb der Aufnahme des Grundkörpers können neben der erhöhten Zugentlastung außerdem dafür sorgen, dass beispielsweise eine Kabel gebundene Pendelleuchte vertikal stufenlos positioniert werden kann. Insbesondere eignet sich der Kabelhalter für Kabel gebundene Komponente bis zu vorzugsweise einem Gewicht von 10 kg bei dynamischer Belastung.

Somit kann der Kabelhalter insbesondere die Funktion eines Zugentlastungshakens zur stufenlosen Positionierung einer Kabel gebundenen Pendelleuchte oder dergleichen realisieren.

Weitere Vorteile und Einzelheiten der Erfindung werden anhand der in den schematischen Figuren dargestellten Ausführungsbeispiele näher erläutert. Hierbei zeigen:
- Fig. 1: Einen Kabelhalter für ein Freizeitfahrzeug, insbesondere ein Wohnmobil oder einen Wohnwagen, in einer schematischen Seitenansicht entsprechend einem Ausführungsbeispiel, wobei ein Deckenelement stark vereinfacht und auszugsweise in einer Schnittdarstellung zur Erläuterung der Montage dargestellt ist;
- Fig. 2: den in Fig. 1 gezeigten Kabelhalter aus der mit II bezeichneten Blickrichtung, wobei das Deckenelement nicht dargestellt ist;
- Fig. 3: den in Fig. 2 dargestellten Kabelhalter in einer schematischen, räumlichen Darstellung entsprechend dem Ausführungsbeispiel;
- Fig. 4: den in Fig. 3 dargestellten Kabelhalter, wobei in stark vereinfachter Weise ein Kabel dargestellt ist; und
- Fig. 5: den in Fig. 1 gezeigten Kabelhalter in einer schematischen, räumlichen Darstellung, wobei die optionale Befestigung einer Abdeckplatte an der Unterseite des Grundkörpers des Kabelhalters veranschaulicht ist.

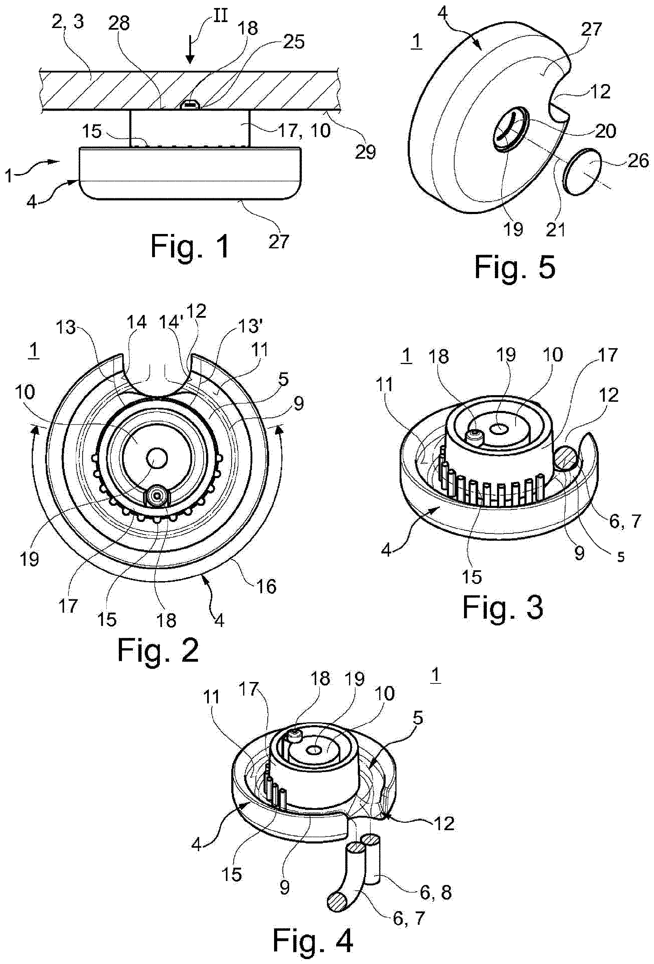

Fig. 1 bis 5 zeigen verschiedene Ansichten eines Kabelhalters 1 in schematischen Darstellungen entsprechend einem Ausführungsbeispiel. Hierbei ist in Fig. 1 ein als Deckenelement 2 ausgebildetes Element 2 eines Freizeitfahrzeugs 3 in stark vereinfachter und auszugsweiser Darstellung gezeigt. Bei dem Freizeitfahrzeug 3 handelt es sich vorzugsweise um ein Wohnmobil oder einen Wohnwagen. Der Kabelhalter 1 dient für solch ein Freizeitfahrzeug 2.

Der Kabelhalter 1 weist einen Grundkörper 4 auf, der im montierten Zustand an dem Deckenelement 2 befestigt ist. Prinzipiell kann der Kabelhalter 1 jedoch auch an einem anderen Element 2 des Freizeitfahrzeugs 3, also nicht notwendigerweise an einem Deckenelement, befestigt werden.

Der Grundkörper 4 weist eine Aufnahme 5 auf, durch die im montierten Zustand ein Kabel 6 geführt ist.

Wie in Fig. 4 gezeigt, umfasst das Kabel 6 Seiten 7, 8 bezüglich des Kabelhalters 1. Die Seite 7 des Kabels 6 kann hierbei zu einer Stromquelle führen, während die Seite 8 des Kabels 6 zu einem Verbraucher, insbesondere einer Pendelleuchte oder dergleichen, führt. Das Einlegen des Kabels 6 in die Aufnahme 5 ist in Fig. 2 bis 4 durch eine strichpunktierte Linie 9 veranschaulicht. In Fig. 3 ist schematisch ein Profil beziehungsweise Querschnitt des Kabels 6 gezeigt. In Fig. 4 ist ausgehend von den auszugsweise gezeigten Seiten 7, 8 des Kabels 6 ein Verlauf des Kabels 6 durch die Aufnahme 5 gezeigt.

Der Grundkörper 4 weist einen Befestigungsdom 10 auf. Der Befestigungsdom 10 dient zum einen zum Befestigen an dem Deckenelement 2. Ferner ist die Aufnahme 5 zwischen einer äußeren Wand 11 des Grundkörpers 4 und dem Befestigungsdom 10 ausgestaltet. Die Aufnahme 5 erstreckt sich hierbei ringförmig um den Befestigungsdom 10. Hierdurch wird ein gewisser Krümmungsradius vorgegeben, wobei ein Abknicken des Kabels 6 in der Aufnahme 5 bereits durch die geometrische Ausgestaltung verhindert ist. Ferner weist die äußere Wand 11 in diesem Ausführungsbeispiel genau eine Öffnung 12 auf, durch die im montierten Zustand die beiden Seiten 7, 8 des Kabels 6 aus der Aufnahme 5 nach außen geführt sind.

Bei einer abgewandelten Ausgestaltung kann auch eine weitere Öffnung vorgesehen sein, so dass jeweils eine Seite 7, 8 durch jeweils eine Öffnung aus der Aufnahme 5 nach außen geführt sein kann.

Wie es in Fig. 2 durch unterbrochen dargestellte Linien 13, 13' veranschaulicht ist, sind der Grundkörper 4 und insbesondere die äußere Wand 11 an der Öffnung 12 mittels Rundungen 14, 14' abgerundet ausgestaltet. Hierdurch werden zum einen scharfe Kanten von vornherein verhindert. Zum anderen wird hierdurch ein enger Knickradius an den Seiten 7, 8 des Kabels 6 verhindert. Somit werden Abnutzungen und hohe Belastungen am Kabel 6 vermieden.

In diesem Ausführungsbeispiel ist die äußere Wand 11 an dem Grundkörper 4 ausgestaltet. Der Kabelhalter 1 kann hierdurch im Wesentlichen durch den Grundkörper 4 ausgebildet sein. Die Aufnahme 5 ist im montierten Zustand zu dem Deckenelement 2 hin offen ausgestaltet.

Der Kabelhalter 1 weist mehrere Rippen 15 auf, von denen zur Vereinfachung der Darstellung nur eine Rippe 15 gekennzeichnet ist. Die Rippen 15 sind jeweils zumindest teilweise an dem Befestigungsdom 10 ausgestaltet. Das in die Aufnahme 5 eingelegte Kabel 6 liegt an den Rippen 15 an. Hierbei erstreckt sich die Anordnung der Rippen 15 über einen Winkelbereich 16, der in diesem Ausführungsbeispiel größer als 180° ist. Vorzugsweise ist der Winkelbereich 16 mindestens 90°, vorzugsweise mindestens 180°, vorgegeben. Der Winkelbereich 16 ist vorzugsweise symmetrisch zu der Öffnung 12 sowie von der Öffnung 12 in der äußeren Wand 11 abgewandt. Auf die Seiten 7, 8 des Kabels 6 wirkende Kräfte drücken dann das in die Aufnahme 5 eingelegte Kabel 6 in vorteilhafter Weise gegen die Rippen 15, um das Kabel 6 zu fixieren. Ein Benutzer kann die Seiten 7, 8 des Kabels 6 entlasten und dadurch das Kabel 6 entlang seiner Erstreckung verschieben. Dadurch wird eine Seite 7, 8 des Kabels 6 länger, während die andere Seite 7, 8 des Kabels 6 kürzer wird. Dadurch kann beispielsweise eine Pendelleuchte angehoben oder abgesenkt werden.

Wenn das Kabel 6 an den Seiten 7, 8 wieder auf Zug belastet ist, dann wird das Kabel 6 zumindest näherungsweise senkrecht zu den Rippen 15 über die einzelnen Rippen 15 geführt. Dadurch ist das Kabel 6 zuverlässig fixiert, insbesondere eingeklemmt.

An dem Befestigungsdom 10 des Grundkörpers 4 kann mittels der Rippen 15 in vorteilhafter Weise eine Rosette 17 ausgestaltet werden.

Der Kabelhalter 1 kann in vorteilhafter Weise an einem Deckenelement 2 montiert werden. Wie es beispielsweise in Fig. 2 bis 4 dargestellt ist, kann an dem Befestigungsdom 10 des Grundkörpers 4 ein stiftförmiges Positionierungselement 18 vorgesehen sein. Das Positionierungselement 18 kann hierbei an dem Grundkörper 4 befestigt sein. Bei einer abgewandelten Ausgestaltung kann das Positionierungselement 18 auch einstückig mit dem Grundkörper 4 ausgebildet sein.

Wie in Fig. 1 dargestellt ist, greift das stiftförmige Positionierungselement 18 im montierten Zustand in eine Vertiefung 25 des Deckenelements 2 ein. Hierbei wird der Grundkörper 4 über ein in Fig. 5 gezeigtes Befestigungsmittel 20, insbesondere eine Schraube 20, mit dem Deckenelement 2 verschraubt. Das Positionierungselement 18 ist hierbei koaxial zu einer Achse 21 des Befestigungsmittels 20 angeordnet. Hierdurch ist eine Verdrehsicherung geschaffen. Außerdem kann in diesem Ausführungsbeispiel, in dem die Vertiefung 25 in dem Deckenelement 2 vorgesehen ist, eine Position und Orientierung des Grundkörpers 4 relativ zu dem Deckenelement 2 gewährleistet werden, so dass dann insbesondere die Position der Öffnung 12 vorgegeben ist.

Ferner kann im montierten Zustand eine Abdeckplatte 26 die Durchgangsöffnung 19 des Befestigungsdoms 10 verschließen. Im montierten Zustand ist die Abdeckplatte 26 dann vorzugsweise bündig mit der Unterseite 27 des Grundkörpers 4 angeordnet. An der Oberseite 28 des Grundkörpers 4 kann der Befestigungsdom 10 unmittelbar an der Seite (Unterseite) 29 des Deckenelements 2 anliegen. Die Vertiefung 25 kann dann an der Seite 29 des Deckenelements 2 vorgesehen sein.

Das Element 2, insbesondere das Deckenelement 2, und das Kabel 6 sind keine Bestandteile des erfindungsgemäßen Kabelhalters 1. Insbesondere kann der Kabelhalter 1 auch unabhängig von einem Element 2 und einem Kabel 6 hergestellt und vertrieben werden.

Die Erfindung ist nicht auf die beschriebenen Ausführungsbeispiele beschränkt.

## Patentansprüche

1. Kabelhalter (1) für ein Freizeitfahrzeug (2), insbesondere ein Wohnmobil oder einen Wohnwagen, mit einem Grundkörper (4), wobei der Grundkörper (4) zumindest eine Aufnahme (5) aufweist, durch die im montierten Zustand ein Kabel (6) geführt ist,
**dadurch gekennzeichnet,**
**dass** der Grundkörper (4) einen Befestigungsdom (10) aufweist, an dem der Grundkörper im montierten Zustand an einem Element (2), insbesondere einem Deckenelement (2), des Freizeitfahrzeugs (3) befestigt ist, dass sich die Aufnahme zwischen einer äußeren Wand (11) und dem Befestigungsdom (10) ringförmig um den Befestigungsdom (10) erstreckt und dass die äußere Wand (11) zumindest eine Öffnung (12) aufweist, durch die im montierten Zustand zumindest eine Seite (7, 8) des Kabels (6) aus der Aufnahme (5) nach außen geführt ist.

2. Kabelhalter nach Anspruch 1,
**dadurch gekennzeichnet,**
**dass** der Grundkörper (4) und/oder die äußere Wand (11) an der Öffnung (12) abgerundet ausgestaltet sind.

3. Kabelhalter nach Anspruch 1 oder 2,
**dadurch gekennzeichnet,**
**dass** der Grundkörper (4) die äußere Wand (11) umfasst und/oder dass die Aufnahme (5) im montierten Zustand zu dem Element (2) hin offen ist.

4. Kabelhalter nach einem der Ansprüche 1 bis 3,
**dadurch gekennzeichnet,**
**dass** an dem Grundkörper (4), insbesondere dem Befestigungsdom (10), zumindest eine Rippe (15) vorgesehen ist, an der im montierten Zustand das Kabel anliegt.

5. Kabelhalter nach einem der Ansprüche 1 bis 4,
**dadurch gekennzeichnet,**
**dass** an dem Grundkörper (4), insbesondere zumindest an dem Befestigungsdom (10), mehrere Rippen (15) vorgesehen sind, die über einen Winkelbereich (16) von mindestens 90°, vorzugsweise mindestens 180°, der sich um den Befestigungsdom (10) erstreckenden Aufnahme (5) an dem Grundkörper (4), insbesondere zumindest dem Befestigungsdom (10), ausgestaltet sind.

6. Kabelhalter nach Anspruch 5,
**dadurch gekennzeichnet,**
**dass** der Winkelbereich (16) von der Öffnung (12) in der äußeren Wand (11) abgewandt ist und/oder dass beide Seiten (7, 8) des Kabels (6) durch die Öffnung (12) aus der Aufnahme (5) nach außen geführt sind.

7. Kabelhalter nach einem der Ansprüche 4 bis 6,
**dadurch gekennzeichnet,**
**dass** die zumindest eine Rippe (15) so ausgestaltet ist, dass im montierten Zustand das Kabel (6) zumindest näherungsweise senkrecht zu der Rippe (15) über die zumindest eine Rippe (15) geführt ist.

8. Kabelhalter nach einem der Ansprüche 1 bis 7,
**dadurch gekennzeichnet,**
**dass** zumindest ein Positionierungselement (18) vorgesehen ist, dass im montierten Zustand den Grundkörper (4) relativ zu dem Element (2) positioniert.

9. Kabelhalter nach Anspruch 8,
**dadurch gekennzeichnet,**
**dass** das Positionierungselement (18) an dem Befestigungsdom (10) vorgesehen ist und/oder dass der Befestigungsdom (10) eine Durchgangsöffnung (19) aufweist, durch die sich im montierten Zustand ein den Grundkörper (4) an dem Element (2) befestigendes Befestigungsmittel (20) erstreckt, wobei das Positionierungselement (18) koaxial zu einer Achse (21) der Durchgangsöffnung (19) angeordnet ist, und/oder dass das Positionierungselement (18) als stiftförmiges Positionierungselement (18) ausgestaltet ist, das im montierten Zustand gegen das Element (2) beaufschlagt ist beziehungsweise in eine an dem Element (2) vorgesehene Vertiefung (25) eingreift.

10. Kabelhalter nach Anspruch 9,
**dadurch gekennzeichnet,**
**dass** eine Abdeckkappe (26) vorgesehen ist, die im montierten Zustand die Durchgangsöffnung (19) des Befestigungsdoms (10) an einer von dem Element (2) abgewandten Seite (27) des Grundkörpers (4) verschließt.

11. Freizeitfahrzeug (3), insbesondere Wohnmobil oder Wohnwagen, mit zumindest einem Kabelhalter (1) nach einem der Ansprüche 1 bis 10, wobei ein Kabel (6) durch die Aufnahme (5) des Grundkörpers (4) des Kabelhalters (1) geführt ist.

12. Freizeitfahrzeug nach Anspruch 11,
**dadurch gekennzeichnet,**
**dass** der Kabelhalter (1) und das durch die Aufnahme (5) des Grundkörpers (4) des Kabelhalters (1) geführte Kabel (6) so ausgestaltet sind, dass eine veränderbare Fixierung des Kabels (6) an dem Kabelhalter (1) ermöglicht ist.
